Europäisches Patentamt

European Patent Office

Office européen des brevets

(19)

(11) Publication number: 0 378 915
A2

# (12) EUROPEAN PATENT APPLICATION

(21) Application number: 89313105.2

(22) Date of filing: 14.12.89

(51) Int. Cl.⁵: H01M 2/34, H01M 2/02,
H01M 6/50

(30) Priority: 22.12.88 US 289656

(43) Date of publication of application:
25.07.90 Bulletin 90/30

(84) Designated Contracting States:
FR GB

(71) Applicant: EVEREADY BATTERY COMPANY,
INC.
Checkerboard Square
St. Louis Missouri 63164(US)

(72) Inventor: Huhndorff, Harry R.
322 Plymouth Drive
Bay Village, OH 44140(US)

(74) Representative: Lord, Hilton David et al
Marks & Clerk 57-60 Lincoln's Inn Fields
London WC2A 3LS(GB)

(54) Electrochemical cell bulge indicator.

(57) The present invention relates to electrochemical cells having indicator means in coactive association with an area of the cell susceptible to bulging, the indicator means preferably comprising a wrap (12) disposed about the cell container, the wrap having two separable sections, one section (14) being secured to the container and the other section (15) being in coactive association with the bulge-susceptible portion (28), the indicator means being adapted to indicate any bulge by noticeable, preferably visible, dislocation (17) relative to the remainder of the cell or the first portion of the wrap.

EP 0 378 915 A2

## ELECTROCHEMICAL CELL BULGE INDICATOR

The present invention relates to electrochemical cells having means for indicating the degree of cell bulging.

Certain electrochemical cells produce gas as a result of electrochemical reaction. The production of gas increases the cell's internal pressure and can cause sealed cells to bulge. If these cells experience abuse conditions, such as forced charging of a primary cell, improper placement of a cell in a device, or an internal short circuit, the internal pressure may increase, causing the cells to bulge further.

There are two basic methods for relieving the pressure increase. One method is to employ a vent in the cell which opens at a predetermined pressure to release the built up gases. This method has the disadvantage of releasing cell materials into the environment which may cause damage either to devices using the cell or to the consumer.

The second method is to use a bulge-activated disconnect mechanism to disconnect the internal cell circuit. Although this method does not relieve the increased pressure, it effectively prevents any further pressure increase. Once the circuit has been disconnected, the cell is no longer susceptible to the abuse condition. Examples of highly effective bulge-activated circuit interrupters are disclosed in U.S. Patent No's 4,690,879 and 4,756,983. A disadvantage arises when many cells are employed in a multicell device. Since the circuit in one of the cells has been disconnected, the device will no longer receive power but, because the degree of bulge is relatively small, there is no way for the consumer to determine which of the cells has bulged sufficiently to disconnect the circuit. Consequently, the consumer may unnecessarily discard cells still having useful life.

The present invention provides an electrochemical cell having indicator means in coactive association with an area of the cell susceptible to bulging, the indicator means being adapted to indicate any bulge by noticeable, preferably visible, dislocation relative to the remainder of the cell.

The area of the cell with which it is preferred to associate the indicator is, where appropriate, the closed end of the cell container, as this part is generally most susceptible to bulging, giving the best and most detectable indication of an abuse condition, for example.

The indicator means is preferably in the form of a wrap disposed about the cell. By being, for example, glued or formed about the bulging portion of the cell, any bulge will cause shifting of the wrap relative to the cell, thereby exposing a part of the container previously hidden by the wrap. To enhance the effect, and distinguish that part of the container usually hidden, it may, for example, be of a different colour, have a different texture (such as polished), or may bear a message.

When employing a wrap, it is preferred to use a wrap whereby bulging results in separation of wrap portions, so that the consequent gap serves as an indication of bulging. In this context, the movement of one portion of the wrap relative to the other provides the 'noticeable dislocation relative to the remainder of the cell'.

Wraps having separable potions are preferably formed integrally with a frangible connection between portions, such as a scored, or perforated, line, although they may be formed separately and one laid over the other, or abutting the other, for example. Advantageously, the portion or portions of the wrap intended not to move are held in position on the container. This may be by tight wrapping, although it will not generally be easy to wrap the unmoving portion sufficiently tightly while still allowing movement of the other portion without further modification of the cell to facilitate such movement, but this may be achieved by special forming or polishing, for example.

Fixing of the unmoving portion is preferably by gluing or welding to the container, or by forming a part of it around a suitable section of the cell to assist in retention.

It will be appreciated that, while it is generally preferred to use wraps having only first and second portions, it is possible to use, for example, a wrap comprising a central portion having arms which can be fixed, such as by gluing, to the container. The central portion is then located over the closed end of the container, and is broken away from the arms on bulging.

In general, it is preferred to use a wrap that effectively covers the container, as the container frequently forms one terminal of the cell. Thus, if the wrap does not cover most of the container, it may be appropriate to employ some other form of insulation to avoid unwanted short circuits.

It is preferred that, when using a cell susceptible to bulging at its closed end, a circuit interrupter is used. Various circuit interrupters are known, and preferred varieties comprise a cover forming one terminal and whose electrical contact with the relevant electrode is broken by bulging. In such an instance, it is preferred to glue or form the wrap onto the cover, so that, until the circuit is broken, there is substantially no movement of the wrap. On breaking the circuit, the wrap moves to indicate bulging.

It is particularly preferred to employ indicator means which provide little or no indication of bulge until a predetermined degree of bulge is attained. Suitable embodiments will be apparent to those skilled in the art, and include use of the above-described circuit interrupters and fixed unmoving wrap portions linked to the moving portion in such a way as to require a given degree of bulge to break the connection between portions.

In an alternative aspect, the present invention provides an electrochemical cell comprising a positive electrode and a negative electrode and an electrolyte contained in a cell container in a manner to establish an effective electrical circuit, the container having means for responding to bulging thereof, the cell further comprising a wrap disposed about the periphery of the container, the wrap having a first wrap section having means for securing to the container, and a second wrap section having means for separating from the first wrap section, the second wrap section further having means for coacting with the bulge responsive means of the container, the second wrap section being noticeably separated from the first wrap section upon effective bulging of the cell container.

In a further aspect, the present invention provides an electrochemical cell having means for responding to bulging of the cell container and a wrap disposed about the cell container, the wrap having two sections, one section being secured to the container and the second section being in coactive engagement with the bulge responsive means, the two wrap sections being noticeably separated from each other upon effective bulging of the cell.

Thus, the present invention provides means for determining the degree of bulging of electrochemical cells, thereby helping to avoid unnecessary wastage.

The present invention permits ready, visible evaluation of the state of discharge or charge of cells. Conveniently, the cell is designed such that bulging activates the separation of the exterior wrap at an effective state of discharge. Also, when used in connection with a bulge-activated circuit interrupter, the cell may be designed to activate the separation at the point of interruption of the circuit. Therefore, the consumer may readily determine which cell in a multicell device is substantially discharged, or is no longer operable.

Wrap articles useful in accordance with the present invention may conveniently be constructed from any of the known materials used as labels or wraps for electrochemical cells. Examples of known materials are paper, polymeric films and composite films of layers of different materials such as paper, polymeric films and metals. A particularly preferred composite film wrap is comprised of multiple layers of polymeric films and metal foils.

In general, when disposed on the cell, the wrap has a first section and a second section. Although the two sections may be two separate units which are not in contact with each other, the first wrap section is preferably in separable contact with the second wrap section. The first wrap section is adhered to the cell with a suitable adhesive material. Prior to placement on the cell, the wrap may be a single unit in which the first section is distinguishable from the second section by a perforated or a scored line. Alternatively, the wrap article may be two separate units. This embodiment is less preferred because the application of these two units to a cell is generally more difficult than the application of a single unit. The wrap may also be in the form of a heat-shrink tube or a strip of material wherein the ends of the strip are adhered to the container.

The cells of the present invention will tend to exhibit bulging during discharge or under abuse conditions such as forced discharge, improper charging or the presence of an internal short circuit. The bulging is typically the result of gas formation during the electrochemical reaction, with means associated with the bulging to cause dissociation of the wrap. For example, cell containers with a closed end may respond to the bulge conditions at that closed end. Advantageously, such cells have a cover component attached to the closed end to enhance the observability of the bulge response. Preferably, the covers on such cells are adapted to provide a bulge-activated circuit interrupter, such as is described in U.S. Patent No's 4,690,879 and 4,756,983 and in European Patent Application No. 89307652.1.

Generally, in cells with bulge-activated circuit interrupters, the container is in electrical contact with one of the electrodes. The cover is in both electrical contact and electrically insulative contact with the container at different points. When the cell bulges, the electrical contacts are broken and the cell circuit is thereby interrupted.

The second wrap section coacts with the bulge responsive means of the container which, in a container having a bulge responsive end, may be effected by the adherence of the second wrap section to the bulge responsive end. A preferred means of adherence is to fold the edge of the wrap over the corner of the container and adhere the edge to the bulge responsive end portion rather than the side of the container. Since the first wrap section is secured to the cell container, bulging of the end of the container and coaction of the second wrap section with this bulge will result in a separation of the second wrap section from the first wrap section.

In general, in cells employing the circuit interrupting embodiment, the degree of bulge to disconnect the circuit should be controlled so that circuit interruption does not occur during normal operation or when exposed to storage temperatures, since cells bulge under normal operating conditions. For example, in a standard type alkaline D-size cylindrical cell (2.277 inches [57.84mm] high and 1.318 inches [33.48mm] in diameter) employing a zinc metal anode, manganese dioxide cathode and potassium hydroxide electrolyte, the closed end of the container may bulge about 0.025 inch [0.635mm] when stored at 71°C for about eight weeks. The cell may vent when the bulge exceeds about 0.070 inch [1.778mm]. Since venting is undesirable, the circuit interruption should occur prior to the bulge reaching 0.070 inch [1.778mm], and yet the cell should be able to bulge beyond the degrees encountered in normal storage and operation.

The preferred circuit interrupter embodiment is a snap-fit cover placed over the bulge-responsive closed-end of the cell container. The snap-fit cover has a terminating dependent flange such that it may be forced onto the closed end of the container to establish an interface fit between the dependent flange and the upstanding wall of the container. The centre of the snap-fit cover is adhered to the closed end of the container by an electrically insulating adhesive. The cover is in electrical contact with the container at the interface between the dependent flange of the cover and the upstanding wall of the container. After effective bulging of the cell container, the dependent flange of the cover slides up the wall and out of electrical contact with the container. The second section of the wrap may be secured to the snap-fit cover at least at the dependent flange. Thereby, during bulging, the second wrap section coacts with the snap-fit cover to separate from the first wrap section.

The present invention will now be further illustrated with reference to the accompanying drawings, in which:

Figure 1 illustrates a wrap article of the present invention;

Figure 2 illustrates a cell covered with a separable wrap according to the present invention;

Figure 3 illustrates the cell of Figure 2 after bulging has occurred and the wrap has separated;

Figure 4 illustrates a cell having a bulge-activated circuit interrupter and a separable wrap according to an embodiment of the present invention; and

Figure 5 illustrates the cell of Figure 2 after bulging has disconnected the circuit and the wrap has separated.

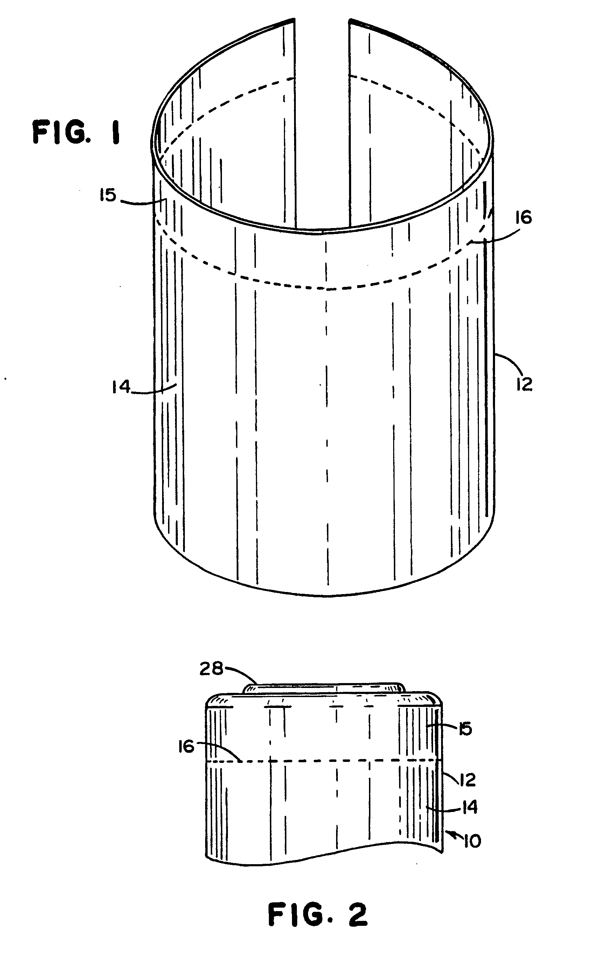

In reference to the drawings, Figure 1 depicts a wrap 12 useful in the present invention. The wrap 12 has a first section 14 and second section 15. First section 14 is in contact with second section 15 at perforation 16. Perforation 16 provides means for separating second section 15 from first section 14.

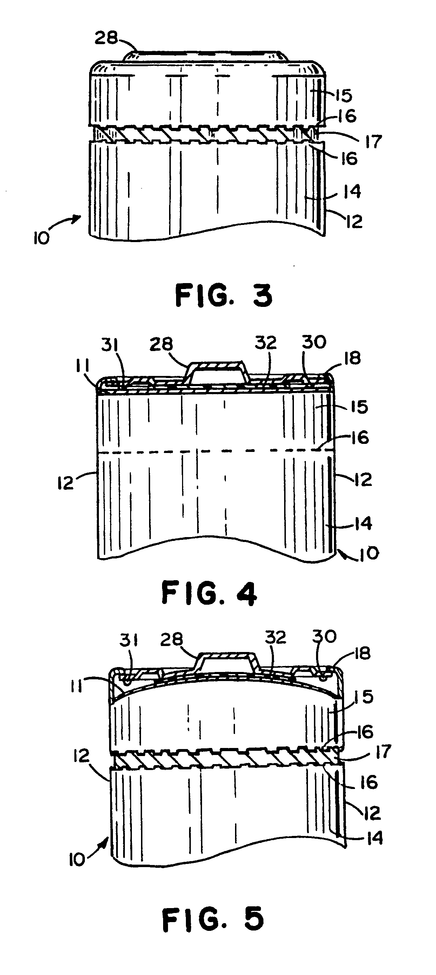

Figures 2 and 3 depict the cells of the present invention having a wrap disposed about the container's periphery. In Figure 2, a non-bulged cell is illustrated. The cell has container 10 covered by wrap 12. Wrap 12 has a first section 14 in contact at perforation 16 with second section 15. The container 10 has terminal cover 28 which is responsive to bulging. Second section 15 is in coactive engagement with cover 28.

Figure 3 depicts the cell of Figure 4 after bulging has occurred. Perforation 16 has broken, and there is a noticeable separation 17 between first and second sections 14 and 15 of wrap 12.

Figures 4 and 5 depict a cell having one type of circuit interrupter according to the invention. In these Figures, the portion of the wrap and container enclosing the circuit interrupter means have been removed. In Figure 4, cell container 10 has bulge responsive closed end 11. Cover 28 is in electrical contact with closed end 11 at welds 30 and 31. Cover 28 is also electrically insulated from closed end 11 by insulating adhesive 32. First section 14 of wrap 12 is attached to the periphery of container 10. Second section 15 of wrap 12 has edge 18 folded onto cover 28 to provide a means for coacting with the bulging of closed end 11 and cover 28. Second section 15 of wrap 12 is in contact with first section 14 at perforation 16.

In Figure 5, bulging of the cell has occurred and welds 30 and 31 have been broken to effect circuit interruption of the cell. Second section 15 of wrap 12 has coacted with the bulging of closed end 11 and cover 28 to effect a separation 17 from first section 14 by rupture of perforation 16.

Although the appearance of the cell container will be an effective noticeable separation, that portion may be highlighted by paint, or by the inscription of a message. Thereby, the user may readily observe which cell has bulged due to improper or extended use.

## Claims

1. An electrochemical cell having indicator means in coactive association with an area of the cell susceptible to bulging, the indicator means being adapted to indicate any bulge by noticeable, preferably visible, dislocation relative to the remainder of the cell.

2. A cell according to Claim 1, wherein the indicator means is a wrap disposed about the cell.

3. A cell according to Claim 2, wherein the wrap comprises a first portion secured to the cell container, and a second portion in coactive association with the area of the cell susceptible to bulging, and adapted to indicate any bulge by noticeable dislocation relative to the first portion.

4. A cell according to any preceding Claim, wherein the bulge-susceptible area is a closed end of the cell container.

5. A cell according to any preceding Claim, further comprising means for interrupting the cell circuit in cooperation with the bulge-susceptible area.

6. A cell according to Claim 5, wherein the cell container is in electrical contact with one of the electrodes, and the cell circuit interruption means comprises a cover disposed over the closed end of the cell container, the cover being both in electrical contact with the end of the container, preferably by welding of the outer edge of the cover to the container, and also in electrically insulative contact with the end of the container, preferably by adhering the central portion of the cover to the closed end of the container by an electrically insulative adhesive, thereby to establish the cover as a terminal of the cell.

7. A cell according to Claim 5 or 6, wherein the cover is a snap-fit cover with a terminating, dependent flange which slides onto and establishes an interference fit with the upstanding wall of the cell container.

8. A cell according to any of claims 3 to 7 wherein the second wrap portion frangibly connected to the first wrap potionn, preferably by a perforated line.

9. A cell according to any of Claims 2 to 8, wherein the wrap is comprised of a polymeric film, paper, a composite film, or a multiple layer of polymeric films and metal foils.

10. A cell according to any preceding Claim, wherein the positive electrode is comprised of manganese dioxide active material, and carbon conductive material, the negative electrode is comprised of zinc active metal, and the electrolyte is comprised of potassium hydroxide.

11. An electrochemical cell having a means for responding to bulging of the cell container and a wrap disposed about the cell container, wherein the wrap has two sections, with one section secured to the container and the second section in coactive engagement with the bulge responsive means, such that upon bulging of the cell, the two sections of the wrap are noticeably separated from each other,
said cell optionally comprising any further suitable features, or combinations thereof, of any preceding claim.

12. An electrochemical cell comprising a positive electrode and a negative electrode and an electrolyte contained in a cell container in a manner to establish an effective electrical circuit, the container having a means for responding to bulging of the container and having a wrap disposed about the periphery of the container, wherein the wrap has a first wrap section having means for securing to the container, and a second wrap section having means for separating from the first wrap section and also having means for coacting with the bulge responsive means so that the second wrap section is noticeably separated from the first wrap section upon effective bulging of the cell container,
said cell optionally comprising any further suitable features, or combinations thereof, of any preceding claim.

**FIG. 1**

**FIG. 2**

FIG. 3

FIG. 4

FIG. 5